(19) Europäisches Patentamt
European Patent Office
Office européen des brevets

(11) **EP 4 423 468 B1**

(12) **FASCICULE DE BREVET EUROPEEN**

(45) Date de publication et mention
de la délivrance du brevet:
**28.05.2025 Bulletin 2025/22**

(21) Numéro de dépôt: **22817294.6**

(22) Date de dépôt: **05.10.2022**

(51) Classification Internationale des Brevets (IPC):
**G01M 11/00** (2006.01)    **G01J 5/90** (2022.01)
**G01J 5/08** (2022.01)    **G01J 5/0821** (2022.01)
**G01J 5/02** (2022.01)    **G01J 5/04** (2006.01)
**G01J 5/061** (2022.01)

(52) Classification Coopérative des Brevets (CPC):
**G01J 5/0205; G01J 1/0252; G01J 1/0407;**
**G01J 1/0425; G01J 1/08; G01J 5/045; G01J 5/061;**
**G01J 5/0821; G01J 5/0865; G01J 5/90;**
**G01M 11/00;** G01J 2001/0481; G01J 2001/083

(86) Numéro de dépôt international:
**PCT/FR2022/051879**

(87) Numéro de publication internationale:
**WO 2023/073296 (04.05.2023 Gazette 2023/18)**

(54) **DISPOSITIF DE MESURE DES PERFORMANCES D'UN DETECTEUR OPTIQUE ET PROCEDE DE MESURE ASSOCIE**

VORRICHTUNG ZUR MESSUNG DER LEISTUNG EINES OPTISCHEN DETEKTORS UND ZUGEHÖRIGES MESSVERFAHREN

DEVICE FOR MEASURING THE PERFORMANCE OF AN OPTICAL DETECTOR, AND ASSOCIATED MEASURING METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.10.2021 FR 2111515**

(43) Date de publication de la demande:
**04.09.2024 Bulletin 2024/36**

(73) Titulaire: **LYNRED**
**91120 Palaiseau (FR)**

(72) Inventeur: **MARTINEAU, Lilian**
**38113 VEUREY VOROIZE (FR)**

(74) Mandataire: **Cabinet Laurent & Charras**
**Le Contemporain**
**50 Chemin de la Bruyère**
**69574 Dardilly Cedex (FR)**

(56) Documents cités:
- **CHORIER PHILIPPE ET AL: "Sofradir latest developments for infrared space detectors", INFRARED TECHNOLOGY AND APPLICATIONS XXXVII, SPIE, 1000 20TH ST. BELLINGHAM WA 98225-6705 USA, vol. 8012, no. 1, 13 May 2011 (2011-05-13), pages 1 - 12, XP060016814, DOI: 10.1117/12.885243**
- **PIDANCIER PATRICIA ET AL: "SOFRADIR in space: an overview on the activity and on the main programs", SENSORS, SYSTEMS, AND NEXT-GENERATION SATELLITES XV, SPIE, 1000 20TH ST. BELLINGHAM WA 98225-6705 USA, vol. 8176, no. 1, 6 October 2011 (2011-10-06), pages 1 - 11, XP060020155, DOI: 10.1117/12.899040**
- **SPIE, PO BOX 10 BELLINGHAM WA 98227-0010 USA, 1 January 2008 (2008-01-01), XP040443630**

- CROUZET P-E ET AL: "Impact of proton radiation on the Ariel AIRS CH1 HAWAII-1RG MWIR detector", SPIE PROCEEDINGS; [PROCEEDINGS OF SPIE ISSN 0277-786X], SPIE, US, vol. 11454, 15 December 2020 (2020-12-15), pages 114540A - 114540A, XP060137193, ISBN: 978-1-5106-3673-6, DOI: 10.1117/12.2561267
- JAIN ANKUR ET AL: "Design, development, characterization and qualification of infrared focal plane area array detectors for space-borne imaging applications", PROCEEDINGS OF SPIE; [PROCEEDINGS OF SPIE ISSN 0277-786X VOLUME 10524], SPIE, US, vol. 9881, 2 May 2016 (2016-05-02), pages 988114 - 988114, XP060069591, ISBN: 978-1-5106-1533-5, DOI: 10.1117/12.2222994
- DANTES DIDIER: "Characterization of infrared detectors for space applications", ALGORITHMS AND TECHNOLOGIES FOR MULTISPECTRAL, HYPERSPECTRAL, AND ULTRASPECTRAL IMAGERY XIX - PROCEEDINGS OF SPIE, vol. 2894, 25 September 1996 (1996-09-25), US, pages 180 - 186, XP055924977, ISSN: 0277-786X, ISBN: 978-1-5106-4548-6, DOI: 10.1117/12.252078
- ANKUR JAIN ET AL: "Development of electro-optical characterization test bench for high performance infrared focal plane area array detectors", PHYSICS AND TECHNOLOGY OF SENSORS (ISPTS), 2012 1ST INTERNATIONAL SYMPOSIUM ON, IEEE, 7 March 2012 (2012-03-07), pages 220 - 223, XP032217370, ISBN: 978-1-4673-1040-6, DOI: 10.1109/ISPTS.2012.6260928
- WILINSKY WALTER V.: "Modular approach to focal plane array testing", ALGORITHMS AND TECHNOLOGIES FOR MULTISPECTRAL, HYPERSPECTRAL, AND ULTRASPECTRAL IMAGERY XIX - PROCEEDINGS OF SPIE, vol. 2474, 30 May 1995 (1995-05-30), US, pages 254 - 264, XP055925036, ISSN: 0277-786X, ISBN: 978-1-5106-4548-6, DOI: 10.1117/12.210560

## Description

### DOMAINE DE L'INVENTION

La présente invention concerne un dispositif de mesure des performances d'un détecteur optique ainsi que le procédé de mesure associé. Plus spécifiquement, l'invention concerne les détecteurs mettant en œuvre les phénomènes quantiques fonctionnant à basse température, le détecteur devant être refroidi à des températures très basses, typiquement comprises entre 50 et 200 K.

L'invention a vocation à être appliquée pour mesurer les performances d'un détecteur dans le domaine du visible, du proche infrarouge, c'est-à-dire dont la longueur d'onde est comprise entre 1 et 2.5 micromètres (également appelé SWIR pour l'expression anglo-saxonne « *Short- Wavelength InfraRed* »), de l'infrarouge moyen, dont la longueur d'onde est comprise entre 3 et 8 micromètres (également appelé MWIR pour l'expression anglo-saxonne « *Mid-Wavelength InfraRed* »), et de l'infrarouge lointain, de longueur d'onde comprise entre 8 et 14 micromètres (également appelé LWIR pour l'expression anglo-saxonne « *Long-Wavelength InfraRed* »).

Ainsi, l'invention peut être appliquée à un grand nombre de détecteurs et pour un grand nombre de domaines distincts. Plus particulièrement, l'invention vise à fournir des mesures de hautes précisions, par exemple pour caractériser les performances d'un détecteur destiné à des applications très exigeantes, telles que les applications dans le domaine spatial.

### ETAT ANTERIEUR DE LA TECHNIQUE

Pour caractériser les performances d'un détecteur de type quantique, notamment avant qu'il soit embarqué dans un satellite, plusieurs mesures distinctes peuvent être réalisées, telles que :

- la mesure radiométrique ;
- la mesure de rémanence ;
- la mesure du courant d'obscurité ; et
- la mesure de la réponse spectrale.

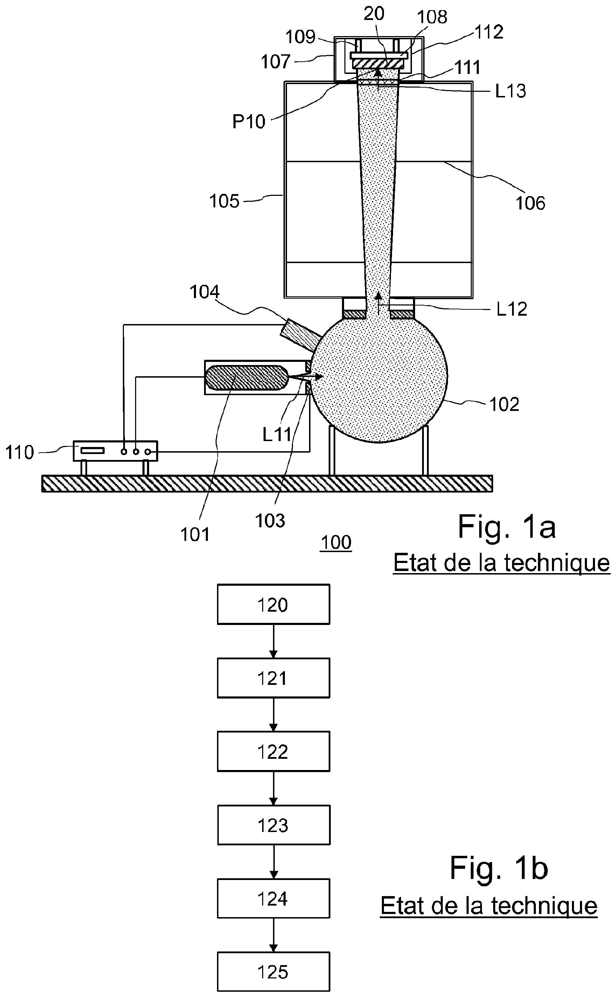

La mesure radiométrique a pour objectif de mesurer la réponse du niveau de sortie du détecteur en fonction du flux de photons incidents sur le détecteur **20**. Pour ce faire, tel qu'illustré sur la figure 1a, un banc de mesure radiométrique **100** comprend classiquement une source de lumière **101** permettant d'obtenir une loi d'émission quasi-corps noir avec un pic d'émission vers 1 micromètre.

Typiquement, cette source de lumière **101** peut présenter une puissance optique de quelques dizaines de Watts avec une température de couleur d'environ 2700 Kelvin. Au sens de l'invention, la « température de couleur » caractérise une source de lumière par comparaison à un matériau idéal émettant de la lumière uniquement par l'effet de la chaleur. Une telle source de lumière **101** comporte classiquement des spires formant une résistance. Cependant, la lumière **L11** générée par ce type de source de lumière **101** est fortement inhomogène et il est possible d'observer, en champ lointain, des variations de lumière dues à la forme des spires de la résistance de la source de lumière **101**.

Pour corriger ce défaut, une sphère intégrante **102** est utilisée à la sortie de la source de lumière **101** de sorte à obtenir un flux lumineux **L12** plus homogène. Plus précisément, cette sphère intégrante **102** est alimentée par la source de lumière **101** à travers un iris réglable **103**. En effet, l'iris réglable **103** permet d'ajuster la quantité de photons tout en conservant un courant constant pour la source de lumière **101** de sorte à garantir la stabilité de ladite source de lumière **101**. En outre, l'iris réglable **103** ne modifie pas la distribution des rayons en sortie de la sphère intégrante **102**.

Pour contrôler la quantité de photons pénétrant dans la sphère intégrante **102,** un détecteur de référence **104** est placé sur la sphère intégrante **102** de sorte à mesurer la quantité de photons présents dans la sphère intégrante **102**. Un contrôleur **110** asservit la puissance de la source de lumière **101** et le taux d'ouverture de l'iris **103** en fonction de la quantité de photons recherchée et mesurée par le détecteur de référence **104**.

Le flux lumineux **L12** en sortie de la sphère intégrante **102** pénètre dans une enceinte thermalisée **105** dont les parois internes sont destinées à absorber les rayonnements dans la gamme de longueurs d'onde d'intérêt. Cette enceinte thermalisée **105** intègre des écrans **106** permettant de limiter l'angle de vue du détecteur **20**. Plus précisément, les flux lumineux parasites sont captés par les écrans **106** et sont absorbés sur les parois de l'enceinte thermalisée **105** de sorte que seul le flux lumineux transmis directement par la sphère intégrante **102** atteigne le détecteur **20**.

La thermalisation de l'enceinte thermalisée **105** permet de limiter la capacité d'émission des parois. Par exemple, l'enceinte peut être maintenue à une température de 12°C alors que la température ambiante est sensiblement de 22°C.

Ainsi, le flux lumineux **L13** en sortie de l'enceinte thermalisée **105** atteint directement le détecteur **20**. Le détecteur **20** est intégré dans un cryostat **107** destiné à reproduire les conditions de fonctionnement du détecteur **20**. Par exemple, pour des applications spatiales, le détecteur **20** peut fonctionner sous vide avec des températures cryogéniques.

Plus précisément, le niveau de vide dans le cryostat **107** peut être de $10^{-5}$ mbars alors que la température du cryostat **107** peut être proche de 180K pour un détecteur en proche infrarouge, entre 150K et 110K pour un détecteur en infrarouge moyen, et entre 60K et 100K pour un détecteur en infrarouge lointain.

Pour limiter la propagation du flux lumineux **L13** à l'intérieur du cryostat **107,** un écran **112** peut également être placé autour du détecteur **20**. Pour ce banc de mesure radiométrique **100**, l'écran **112** est ouvert pour recevoir le flux lumineux **L13**.

Compte tenu des différences de pression et de température entre le cryostat **107** et l'enceinte thermalisée **105**; le cryostat **107** est isolé de l'enceinte thermalisée **105**. Le flux lumineux **L13** pénètre dans le cryostat **107** par une fenêtre optique **111**. Entre la fenêtre optique **111** et l'écran **112,** le cryostat comporte classiquement un filtre spécifiquement dimensionné pour laisser passer uniquement la gamme de longueurs d'onde utilisée par le détecteur **20**.

Par ailleurs, un détecteur **20** comprend classiquement un ensemble d'éléments sensibles ou pixels. Il est classiquement recherché de mesurer le niveau de sortie de ces éléments sensibles en fonction du flux de photons incidents. Pour ce faire, le détecteur **20** est monté sur un support mobile **108** au moyen d'un organe de déplacement **109** de sorte à ajuster le point central **P10** de réception du flux lumineux **L13** afin que ce point central **P10** soit placé au centre du détecteur **20** avant d'effectuer la mesure du niveau de sortie du détecteur **20**.

Pour effectuer la mesure radiométrique, un opérateur commence par monter le détecteur **20** sur le support mobile **108** du cryostat **107,** dans une première étape **120** illustrée sur la figure 1b. Il commande ensuite la mise sous vide du cryostat **107,** lors d'une deuxième étape **121**.

Compte tenu du fort niveau de vide recherché, cette mise sous vide du cryostat **107** est particulièrement longue et dure classiquement entre 4 et 8 heures, période au cours de laquelle des contrôles fréquents de la pression et de la température doivent être réalisés. Lorsque le niveau de vide recherché est atteint, le cryostat **107** est refroidi à la température recherchée, dans une troisième étape **122**. Cette troisième étape **122** de refroidissement du cryostat **107** dure généralement entre 1 et 3 heures.

Lorsque ces étapes de préparation du cryostat **107** sont terminées, l'opérateur procède aux différentes mesures radiométriques pour les différents éléments sensibles, dans une étape **123**.

Pour ce faire, il commande le déplacement du support mobile **108** de sorte à ajuster le point central **P10** de réception du flux lumineux **L13** afin que ce point central **P10** soit placé au centre du détecteur **20**. La mesure du niveau de sortie des éléments sensibles **P10** est alors effectuée pour plusieurs quantités de photons, en faisant varier l'ouverture de l'iris **103**.

Ainsi, les mesures s'enchainent pour mesurer le niveau de sortie de l'ensemble des éléments sensibles du détecteur **20**. Typiquement, l'ensemble de ces mesures nécessite environ une journée de manipulations pour un opérateur.

A la fin des mesures, il convient d'augmenter progressivement et lentement la température afin que le cryostat **107** revienne à température ambiante, dans une étape **124**. Pour protéger l'intégrité physique du détecteur, cette étape **124** nécessite environ une journée de manipulations au cours de laquelle des contrôles fréquents de la pression et de la température doivent être réalisés. La dernière étape **125** consiste à remonter le niveau de vide avant de pouvoir retirer le cryostat **107** du banc de mesure radiométrique **100**. Au total, l'ensemble des étapes **120** à **125** nécessitent environ une semaine de manipulations pour un opérateur.

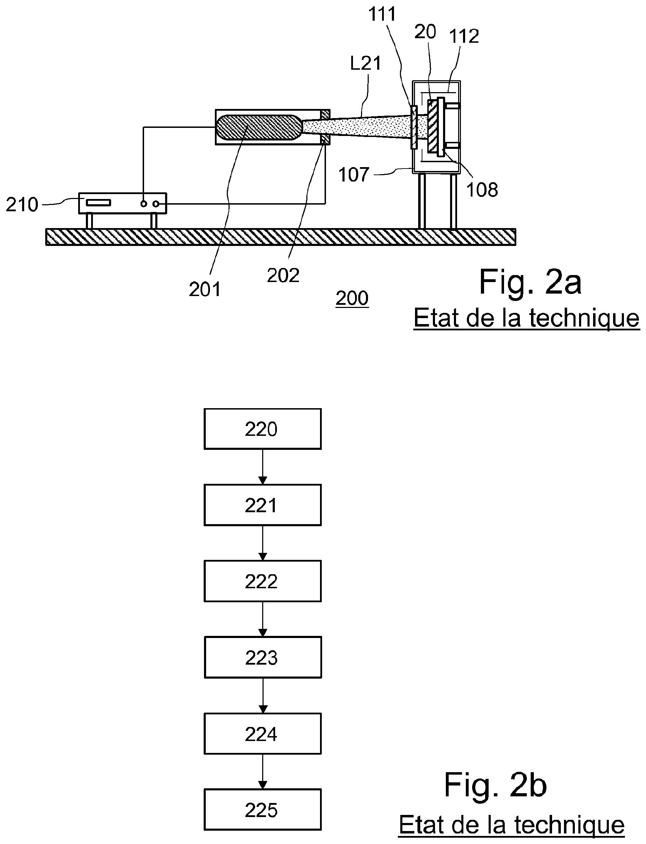

Avant ou après que les performances du détecteur **20** soient obtenues sur le banc de mesure radiométrique **100,** ce détecteur **20** peut être analysé sur un autre banc de mesure, par exemple un banc de mesure de rémanence **200,** tel qu'illustré sur la figure 2a. Pour ce faire, le cryostat **107** est démonté du banc de mesure radiométrique **100** pour être placé dans le banc de mesure de rémanence **200**.

Préalablement à l'installation du cryostat **107** intégrant le détecteur **20** sur le banc de mesure de rémanence **200,** le filtre monté sur l'écran **112** du cryostat **107** peut être modifié.

La mesure de rémanence a pour objectif d'observer les effets de variations temporelles d'une scène sur les images d'un détecteur. Pour ce faire, il est recherché si une image précédemment captée par un détecteur influence l'image en cours de lecture (effet de rémanence) et, pour les détecteurs réalisant une intégration au cours de la lecture, si l'image en cours d'intégration par le détecteur influence l'image en cours de lecture (effet de pré-rémanence).

Pour effectuer cette mesure, il est nécessaire d'utiliser une source lumineuse **201** dont l'intensité lumineuse varie temporellement de manière contrôlée. Ainsi, la source lumineuse **201** est associée à un obturateur mécanique **202** apte à obturer la sortie de la source lumineuse **201** avec un temps de réponse de l'ordre de la milliseconde.

La source lumineuse **201** peut être identique à la source lumineuse **101** du banc de mesure radiométrique **100**.

Pour effectuer la mesure de rémanence, un opérateur commence par monter le cryostat **107** sur le banc de mesure de rémanence **200,** dans une première étape **220** illustrée sur la figure 2b. Il commande ensuite la mise sous vide du cryostat **107,** dans une deuxième étape **221,** et le refroidissement du cryostat **107,** dans une troisième étape **222**.

Lorsque ces étapes de préparation du cryostat **107** sont terminées, l'opérateur procède aux différentes mesures de rémanence, dans une étape **223**. Pour ce faire, il commande l'acquisition de plusieurs images successives modifiées pendant les instants de fermeture de l'obturateur **202,** et il compare les images acquises avec des images de référence de sorte à déceler les effets de pré-rémanence ou de rémanence sur les images acquises. L'effet de rémanence apparait lorsqu'une image acquise présente des artefacts liés à l'influence de l'image précédente alors que l'effet de pré-rémanence apparait, pour les détecteurs réalisant une intégration au cours de la lecture, lorsqu'une image en cours de lecture présente des artefacts liés à l'influence de l'image en cours d'intégration (acquisition en mode IWR pour l'acronyme anglo-saxon « *Integrate While Read* »).

De la même manière que pour le banc de mesure radiométrique **100,** lorsque les mesures de rémanence sont terminées, l'opérateur commande l'augmentation de la température du cryostat **107,** dans une étape **224,** et la remontée de la pression, dans une étape **225.** Au total, l'ensemble des étapes **220** à **225** nécessitent quelques jours de manipulations pour un opérateur.

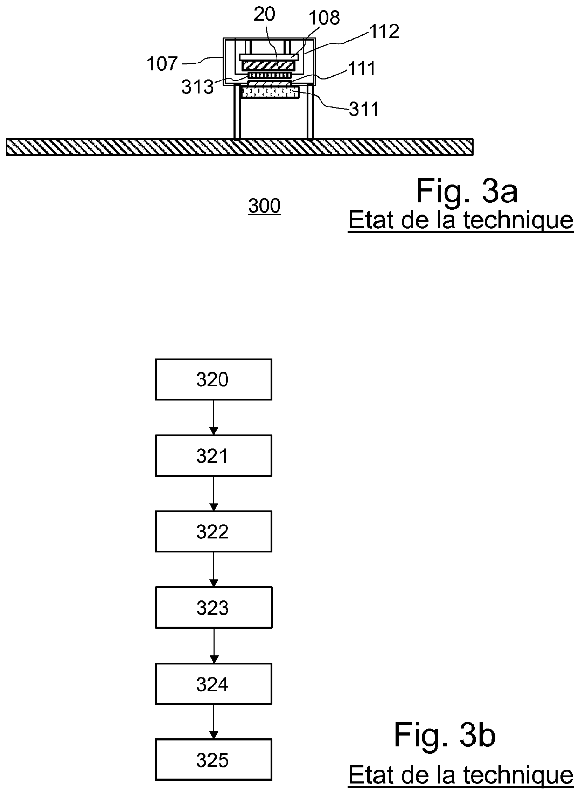

Avant ou après que les performances du détecteur **20** soient obtenues sur le banc de mesure de rémanence **200,** ce détecteur **20** peut être analysé sur un banc de mesure du courant d'obscurité **300,** tel qu'illustré sur la figure 3a. Pour ce faire, le cryostat **107** est démonté du banc de rémanence **200** pour être placé sur le banc du courant d'obscurité **300.**

La mesure d'obscurité ou la mesure de courant d'obscurité a pour objectif de mesurer le courant d'obscurité du détecteur **20,** c'est-à-dire le courant de fuite de composants intégrés dans le détecteur **20** sans la présence de flux. Le niveau de courant d'obscurité influence les performances du détecteur. En effet, plus le courant d'obscurité est élevé, plus le nombre de pixels défectueux est lui-même élevé, et plus le bruit de courant d'obscurité impacte le bruit global du détecteur **20.**

Ainsi, la mesure du courant d'obscurité fixe en partie la température de fonctionnement du détecteur **20.** Pour mesurer le courant d'obscurité, il faut que le courant inhérent au flux provenant du banc de test soit négligeable par rapport au courant d'obscurité à mesurer.

Il est donc également important de faire varier la température pendant cette mesure pour s'assurer que justement le courant d'obscurité mesuré n'est pas constitué d'un flux de fond.

Pour ce faire, préalablement à l'installation du cryostat **107** intégrant le détecteur **20** sur le banc du courant d'obscurité **300,** le filtre est démonté de l'écran **112** du cryostat **107** pour être remplacé par un obturateur **313** de sorte à isoler le détecteur **20.** En outre, la fenêtre optique **111** peut également être recouverte d'un bouchon opaque **311** de sorte à isoler encore davantage le détecteur **20.**

Ces deux niveaux d'isolation lumineuse permettent de mesurer le courant de fuite des éléments sensibles du détecteur **20** en faisant varier la température du cryostat **107.**

Pour ce faire, tel qu'illustré sur la figure 3b, un opérateur doit encore monter le détecteur **20** dans le cryostat **107,** dans une première étape **320,** puis commander la mise sous vide du cryostat **107,** dans une deuxième étape **321,** et le refroidissement du cryostat **107,** dans une troisième étape **322.** Après avoir effectué les mesures du courant de fuite de chaque élément sensible, dans une étape **323,** l'opérateur commande l'augmentation de la température du cryostat **107,** dans une étape **324,** et la remontée de la pression, dans une étape **325.** Au total, l'ensemble des étapes **320** à **325** nécessitent encore environ une semaine de manipulations pour un opérateur.

Le dernier banc de mesure vise à obtenir la réponse spectrale du détecteur **20.** La mesure de la réponse spectrale permet d'obtenir la réponse en longueur d'onde des pixels du détecteur **20.** En effet, quelle que soit la technologie utilisée, la réponse du détecteur **20** n'est pas homogène en fonction de la longueur d'onde. Elle peut dépendre de nombreux paramètres technologiques.

Il est souvent nécessaire de connaitre la réponse spectrale, notamment lorsqu'il est recherché d'utiliser des filtres optiques devant le détecteur **20.** Ainsi, il est possible de prévoir si certaines longueurs d'onde sont à filtrer ou non en fonction de l'application recherchée.

Pour effectuer la mesure de la réponse spectrale, il convient de faire varier la longueur d'onde d'un flux lumineux monochrome **L42** et de mesurer le rapport entre la réponse du détecteur **20** et la réponse d'un détecteur de référence **404** dont la réponse spectrale est connue.

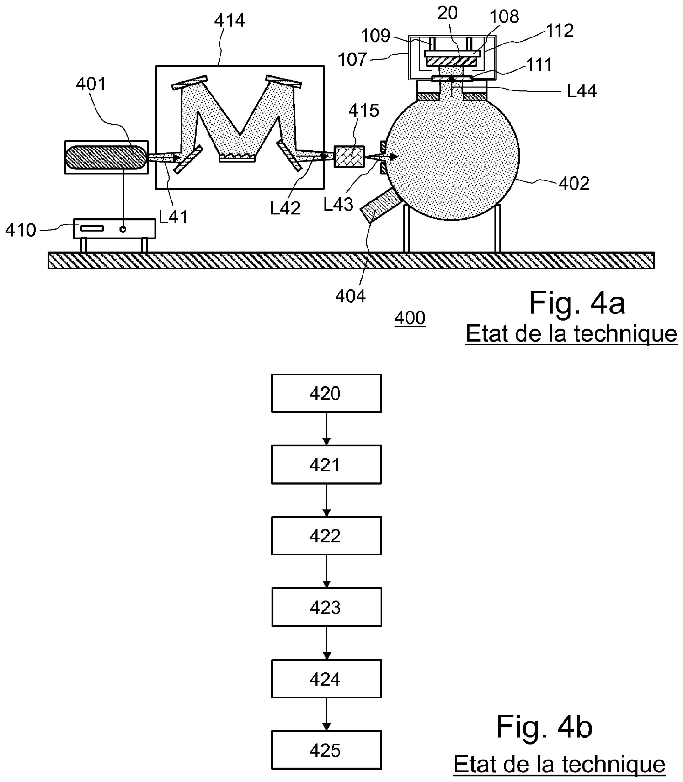

Pour ce faire, tel qu'illustré sur la figure 4a, le banc de mesure de la réponse spectrale **400** comprend classiquement une source lumineuse **401** dont le flux lumineux est modulé en longueur d'onde par un contrôleur **410.** La source lumineuse **401** peut être identique à la source lumineuse **101** du banc de mesure radiométrique **100.**

Le flux lumineux **L41** généré par la source lumineuse **401** est transmis à un réseau de diffraction **414** permettant d'obtenir un flux lumineux monochrome **L42.** Le flux lumineux monochrome **L42** est ensuite traité par un filtre **415,** pour supprimer l'influence d'ordres supérieurs du réseau de diffraction **414,** avant d'être inséré dans une sphère intégrante **402.** Cette sphère intégrante **402** permet de générer un flux lumineux à destination du détecteur de référence **404** ainsi qu'un flux lumineux **L44** à destination du détecteur **20.** Pour ce faire, le cryostat **107** du détecteur présente un écran **112** qui est ouvert et une fenêtre optique **111,** également ouverte. Un filtre peut éventuellement être monté sur l'écran **112.**

Pour utiliser le banc de mesure de la réponse spectrale **400,** un opérateur doit encore monter le détecteur **20** dans le cryostat **107,** dans une première étape **420,** puis commander la mise sous vide du cryostat **107,** dans une deuxième étape **421,** et le refroidissement du cryostat **107,** dans une troisième étape **422,** tel qu'illustré sur la figure 4b. Après avoir effectué les mesures de la réponse spectrale, dans une étape **423,** l'opérateur commande l'augmentation de la température du cryostat **107,** dans une étape **424,** et la remontée de la pression, dans une étape **425.** Au total, l'ensemble des étapes **420** à **425** nécessitent encore environ une semaine de manipulations pour un opérateur.

Ainsi, pour caractériser complètement un détecteur **20,** le cryostat **107** est transporté entre les bancs **100, 200, 300** et **400,** et un ou plusieurs opérateurs doivent effectuer l'ensemble des étapes **120-125, 220-225, 320-325** et **420-425.** Il s'ensuit que la caractérisation complète d'un détecteur **20** nécessite aujourd'-hui environ un mois de travail pour un opérateur.

En outre, ces différents bancs de mesure **100, 200, 300** et **400** présentent également un encombrement important.

CHORIER PHILIPPE ET AL: "Sofradir latest developments for infrared space detectors", INFRARED TECHNOLOGY AND APPLICATIONS XXXVII, vol. 8012, no. 1, 13 mai 2011, pages 1-12 divulgue un exemple de l'art antérieur.

Le problème technique de l'invention est donc de caractériser un détecteur avec plusieurs mesures distinctes, telles que la mesure radiométrique, la mesure de rémanence, la mesure de courant d'obscurité, et la mesure de la réponse spectrale, de manière plus simple et plus rapide.

## EXPOSE DE L'INVENTION

Pour répondre à ce problème technique, l'invention propose un banc de mesure unique permettant de réaliser les différentes mesures sans déplacer le détecteur. Pour ce faire, le détecteur est placé dans un cryostat dans lequel pénètre une fibre optique monomodale destinée à transmettre un faisceau lumineux en regard du détecteur.

La fibre optique monomodale comporte deux extrémités : une première extrémité placée à l'intérieur du cryostat, et une seconde extrémité placée à l'extérieur du cryostat et sur laquelle plusieurs modules de génération d'un flux lumineux intégrant une source fibrée peuvent être connectées de sorte à réaliser plusieurs mesures distinctes, telles que la mesure radiométrique, la mesure de rémanence, la mesure de courant d'obscurité, et la mesure de la réponse spectrale.

A cet effet, selon un premier aspect, l'invention concerne un dispositif de mesure des performances d'un détecteur optique, comprenant :

- un cryostat comprenant des moyens de mise sous vide et des moyens de refroidissement aptes à placer le détecteur dans des conditions de fonctionnement attendues ;
- des moyens de mesure des performances du détecteur ;
- un support apte à recevoir le détecteur, fixé à l'intérieur du cryostat ; et
- un écran disposé autour du support de sorte à limiter les rayonnements pouvant atteindre le support dans une gamme de longueurs d'ondes du détecteur.

L'invention se caractérise en ce que le dispositif de mesure comprend également :

- une fibre optique monomodale dans la gamme de longueurs d'onde de fonctionnement du détecteur, ladite fibre optique étant insérée dans une ouverture du cryostat, et comprenant :

- • une première extrémité fixée au niveau d'une ouverture de l'écran, de sorte à projeter un flux lumineux sur tout ou partie du détecteur ; et
- • une seconde extrémité, extérieure au cryostat, destinée à recevoir un flux lumineux ; et

- au moins deux modules de génération d'un flux lumineux intégrant une source fibrée apte à générer le flux lumineux dans la seconde extrémité de la fibre optique ;

les moyens de mesure des performances du détecteur étant aptes à mesurer lesdites performances en fonction du flux lumineux reçu sur la seconde extrémité, plusieurs mesures distinctes pouvant être réalisées en interchangeant le module connecté sur la seconde extrémité.

Au sens de l'invention, une « source fibrée » est une source dont le faisceau lumineux généré est couplé avec un mode de la fibre optique associée à la source. Cette source fibrée peut être une diode électroluminescente, une source super-continuum ou un laser par exemple. Une source super-continuum est obtenue en dirigeant un faisceau laser sur un matériau présentant des propriétés de transmission optiques non-linéaires de sorte que la traversé du faisceau laser dans le matériau modifie le spectre du faisceau laser.

Par source fibrée, on entend le couplage d'une source lumineuse avec une fibre optique ; le flux lumineux issu de la source primaire est guidé à l'intérieur de la fibre optique et jusqu'en sortie de fibre. Le couplage entre la source et la fibre peut se faire par alignement des deux composants et/ou au moyen d'un composant(s) intermédiaire(s) (lentille, prisme...)

L'invention permet ainsi d'effectuer plusieurs mesures sans déplacer le détecteur au sein du cryostat, et sans nécessiter des mises sous vide répétées de ce dernier, en modifiant le flux lumineux injecté dans la fibre optique au moyen du module de génération dudit flux lumineux. Il s'ensuit qu'il n'est plus nécessaire d'effectuer un grand nombre de phases de montage/diminution de la pression et de montage/diminution de la température car le cryostat peut rester sur le même banc de mesure et dans le même état lors des changements de flux lumineux.

La présente invention consiste donc à remplacer les éléments volumineux des bancs de mesure radiométrique et de mesure de la réponse spectrale, c'est-à-dire les sources de lumière et les sphères intégrantes, par un module intégrant une source fibrée et une fibre optique monomodale.

En effet, le flux lumineux généré par une source fibrée, par exemple une diode électroluminescente, présente classiquement une puissance inférieure aux sources de lumières de l'état de la technique ainsi qu'une répartition spatiale inhomogène en raison de sa structure. Il serait possible d'utiliser une sphère intégrante pour réaliser une homogénéisation. Cependant, l'utilisation d'une sphère intégrante fait perdre beaucoup de puissance et il serait alors difficile d'obtenir les niveaux de puissance recherchés.

Pour résoudre ce problème, l'invention propose d'utiliser une fibre optique monomodale, qui filtre spatialement le flux lumineux issue de la source fibrée et permet une divergence homogène à sa sortie, par exemple sous la forme d'un faisceau gaussien, sans perdre de puissance lumineuse.

Ainsi, le caractère monomodal de la fibre optique permet de corriger les inhomogénéités, si bien qu'en sortie de la fibre optique monomodale, le flux lumineux transmis sur le détecteur est équivalent aux flux lumineux utilisés dans l'état de la technique.

De manière connue, le caractère monomodal de la fibre optique est obtenu en sélectionnant le saut d'indice (NA) et le diamètre (a) du cœur de la fibre optique de sorte que la fréquence normalisée (V) soit de l'ordre de 1 à 2.405, selon la relation suivante :

$$V = \frac{2\pi a N A}{\lambda}$$

avec $\lambda$ correspondant à la longueur d'onde d'intérêt du détecteur.

Au sens de l'invention, une fibre optique « monomodale » est une fibre optique dont la fréquence normalisée (V) est comprise entre 1.2 et 3.8 dans la gamme de longueurs d'onde d'intérêt. En effet, dans cette plage de fréquence normalisée, la majeure partie de la gamme de longueurs d'onde présente un comportement monomodal et la fibre optique est très peu sujette au couplage des flux lumineux externes. Ainsi, la fibre optique présente une isolation efficace par rapport aux perturbations externes.

L'utilisation d'une fibre optique présente également d'autres avantages.

En effet, la fibre optique peut également être sélectionnée pour présenter une gaine optique capable de filtrer très efficacement les rayonnements extérieurs et favoriser la transmission du flux lumineux dans la gamme de longueurs d'onde d'intérêt du détecteur. Ainsi, pour des applications dans l'infrarouge moyen ou lointain, une fibre optique avec un cœur en silice n'est pas optimale en raison de l'absorption de la silice.

De préférence, la fibre optique est réalisée avec un cœur en verre fluoré, et par exemple en Zblan, en verre de chalcogénure ou en un matériau polycristallin, tel que le chlorure d'argent ou le bromure d'argent. Le Zblan tire son nom des éléments contenus dans le verre fluoré, notamment zirconium, baryum, lanthane, aluminium et sodium, et il est très performant pour les applications dans l'infrarouge moyen, dont la longueur d'onde est comprise entre 3 et 8 micromètres. Les fibres optiques en verre de chalcogénure présentent un large domaine de transparence dans l'infrarouge et des propriétés optiques non-linéaires importantes. Ainsi, les fibres optiques en verre de chalcogénure sont adaptées pour les applications dans l'infrarouge moyen et l'infrarouge lointain. Les fibres optiques avec un cœur en matériau polycristallin sont largement développées ; elles présentent donc un coût relativement faible et permettent d'assurer l'homogénéité du faisceau lumineux transmis au détecteur dans tous les domaines de l'infrarouge.

En outre, la fibre optique peut être intégrée dans le cryostat avec une très faible ouverture de sorte à limiter le risque de perte de température ou de pression.

Par ailleurs, l'utilisation d'une fibre optique permet d'utiliser des fonctions optiques intégrées provenant des télécommunications.

Ainsi, pour effectuer la mesure radiométrique, l'un des modules de génération du flux lumineux, destiné à être connectée sur la seconde extrémité de la fibre optique, comprend :

- une source fibrée destinée à générer un flux lumineux à l'intérieur d'une première fibre optique d'alimentation ;
- un atténuateur optique, apte à limiter le flux lumineux, connecté entre la première fibre optique d'alimentation et une seconde fibre optique d'alimentation ;
- un séparateur optique, connecté sur la seconde fibre optique d'alimentation, apte à séparer le flux lumineux de la seconde fibre optique d'alimentation sur une troisième et une quatrième fibres optiques d'alimentation ; la troisième fibre optique d'alimentation étant connectée sur la seconde extrémité de la fibre optique insérée dans le cryostat ; et
- un détecteur de référence connecté sur la quatrième fibre optique d'alimentation, apte à mesurer le flux lumineux en sortie du séparateur optique de sorte à commander la puissance de la source fibrée et de l'atténuateur optique pour obtenir une puissance lumineuse de mesure attendue.

Il s'ensuit qu'en mettant en œuvre limitativement des éléments optiques peu volumineux, il est possible d'effectuer une mesure radiométrique aussi efficace que les mesures radiométriques réalisées sur les bancs de mesure radiométrique de l'état de la technique.

Pour effectuer une mesure de rémanence, l'un des modules de génération du flux lumineux, destiné à être connectée sur la seconde extrémité de la fibre optique, comprend :

- une source fibrée destinée à générer un flux lumineux à l'intérieur d'une première fibre optique d'alimentation ;
- un obturateur optique apte à bloquer le flux lumineux, ledit obturateur étant connecté entre la première fibre optique d'alimentation et une seconde fibre optique d'alimentation ;
- un séparateur optique connecté sur la seconde fibre optique d'alimentation, apte à séparer le flux lumineux de la seconde fibre optique d'alimentation sur une troisième et une quatrième fibre optique d'alimentation ; la troisième fibre optique d'alimentation étant connectée sur la seconde extrémité de la fibre optique insérée dans le cryostat ; et

- un détecteur de référence connecté sur la quatrième fibre optique d'alimentation, apte à contrôler le flux lumineux en sortie du séparateur optique.

Contrairement à un banc de mesure de rémanence classique, ce mode de réalisation permet d'utiliser un obturateur optique ou acousto-optique en lieu et place d'un obturateur mécanique. Or, un obturateur optique ou acousto-optique présente un temps de réponse de l'ordre de la microseconde, alors qu'un obturateur mécanique de type « *shutter* » par exemple, présente un temps de réponse de l'ordre de la milliseconde. Il s'ensuit que la mesure de rémanence peut être plus précise.

En outre, le module de génération de flux lumineux alors mis en œuvre peut être utilisé pour effectuer une mesure du courant d'obscurité en coupant l'alimentation électrique de la source fibrée. En effet, en utilisant une fibre optique avec une fréquence normalisée (V) comprise entre 1.5 et 3 dans la gamme de longueurs d'onde d'intérêt, les longueurs d'ondes des flux lumineux des lumières ambiantes ne peuvent pas être couplées avec le la fibre optique. Ainsi, il n'est pas nécessaire d'utiliser un bouchon.

Pour effectuer une mesure de la réponse spectrale, l'un des modules de génération du flux lumineux, destiné à être connectée sur la seconde extrémité de la fibre optique, comprend :

- une source fibrée destinée à générer un flux lumineux à l'intérieur d'une première fibre optique d'alimentation ;
- un réseau de diffraction connecté sur la première fibre optique d'alimentation ;
- un filtre connecté en sortie du réseau de diffraction ; et
- une seconde fibre optique d'alimentation connectée en sortie du second filtre.

Ainsi, la mesure radiométrique, la mesure de rémanence, la mesure de courant d'obscurité, et la mesure de la réponse spectrale peuvent être réalisées par des sources fibrées connectées sur la fibre optique insérée dans le cryostat si bien qu'il n'est pas nécessaire de déplacer le détecteur entre deux mesures.

Il suffit donc de changer le mode de fonctionnement et/ou le module de génération du flux lumineux pour passer d'une mesure à l'autre, sans avoir besoin de modifier le niveau de vide ou la température du cryostat. Le dispositif permet donc d'effectuer l'ensemble des mesures requises de manière simplifiée.

Ainsi, selon un second aspect, l'invention concerne un procédé de mesure des performances d'un détecteur optique au moyen d'un dispositif de mesure du type de celui précédemment décrit. Ce procédé comprend les étapes suivantes :

- montage du détecteur dont on désire mesurer les performances sur le support du cryostat ;
- mise sous vide du cryostat de sorte à atteindre un niveau de vide de fonctionnement recherché du détecteur ;
- refroidissement du cryostat de sorte à atteindre une température de fonctionnement recherchée du détecteur ;
- connexion d'un premier module de génération de flux lumineux sur la seconde extrémité de la fibre optique ;
- mesure des performances du détecteur ;
- déconnexion du premier module de la seconde extrémité de la fibre optique ;
- connexion d'un second module de génération de flux lumineux sur la seconde extrémité de la fibre optique ;
- mesure des performances du détecteur ;
- réchauffage du cryostat de sorte à atteindre la température ambiante ; et
- remise sous pression ambiante du cryostat et démontage du détecteur.

De préférence, quatre mesures distinctes sont réalisées de sorte que le procédé comprend les étapes suivantes :

- connexion d'un premier module de génération de flux lumineux pour effectuer une mesure radiométrique sur la seconde extrémité de la fibre optique ;
- mesure radiométrique du détecteur ;
- déconnexion du premier module de génération de flux lumineux de la seconde extrémité de la fibre optique ;
- connexion d'un second module de génération de flux lumineux pour effectuer une mesure de rémanence sur la seconde extrémité de la fibre optique ;
- mesure de la rémanence du détecteur ;
- mesure du courant d'obscurité du détecteur ;
- déconnexion du second module de génération de flux lumineux de la seconde extrémité de la fibre optique ;
- connexion d'un troisième module de génération de flux lumineux pour effectuer une mesure de la réponse spectrale sur la seconde extrémité de la fibre optique ; et
- mesure de la réponse spectrale du détecteur.

**BREVE DESCRIPTION DES FIGURES**

L'invention sera bien comprise à la lecture de la description qui suit, dont les détails sont donnés uniquement à titre d'exemple, et développée en relation avec les figures annexées, dans lesquelles des références identiques se rapportent à des éléments identiques :

La figure 1a est une représentation schématique d'un banc de mesure radiométrique de l'état de la technique ;

La figure 1b illustre les étapes de réalisation d'une mesure radiométrique à partir du banc de la figure 1a ;

La figure 2a est une représentation schématique d'un banc de mesure de rémanence de l'état de la technique ;

La figure 2b illustre les étapes de réalisation d'une mesure de rémanence à partir du banc de la figure 2a ;

La figure 3a est une représentation schématique d'un banc de mesure du courant d'obscurité de l'état de la technique ;

La figure 3b illustre les étapes de réalisation d'une mesure du courant d'obscurité à partir du banc de la figure 3a ;

La figure 4a est une représentation schématique d'un banc de mesure spectrale de l'état de la technique ;

La figure 4b illustre les étapes de réalisation d'une mesure spectrale à partir du banc de la figure 4a ;

La figure 5 est une représentation schématique d'un dispositif de mesure des performances d'un détecteur optique selon un mode de réalisation de l'invention ;

La figure 6 illustre schématiquement une configuration du dispositif de mesure de la figure 5 pour obtenir une mesure radiométrique ;

La figure 7 illustre une configuration du dispositif de mesure de la figure 5 pour obtenir une mesure de rémanence ;

La figure 8 illustre une configuration du dispositif de mesure de la figure 5 pour obtenir une mesure spectrale ;

La figure 9 illustre l'évolution du flux lumineux en sortie d'une source fibrée dans la configuration de la figure 6 ;

La figure 10 illustre l'évolution du flux lumineux en sortie d'une fibre optique insérée dans un cryostat dans la configuration de la figure 6 ;

La figure 11 illustre l'évolution du flux lumineux sur le détecteur dans la configuration de la figure 6 ;

La figure 12 illustre l'évolution du flux lumineux en sortie d'une sphère intégrante dans le banc de mesure radiométrique de l'état de la technique de la figure 1a ;

La figure 13 illustre l'évolution du flux lumineux en entrée d'une fenêtre optique dans le banc de mesure radiométrique de l'état de la technique de la figure 1a ;

La figure 14 illustre l'évolution du flux lumineux sur le détecteur dans le banc de mesure radiométrique de l'état de la technique de la figure 1a ; et

La figure 15 illustre les étapes de réalisation d'une mesure radiométrique, mesure de rémanence, d'une mesure du courant d'obscurité et d'une mesure spectrale selon un mode de réalisation du procédé de l'invention.

## DESCRIPTION DETAILLEE DE L'INVENTION

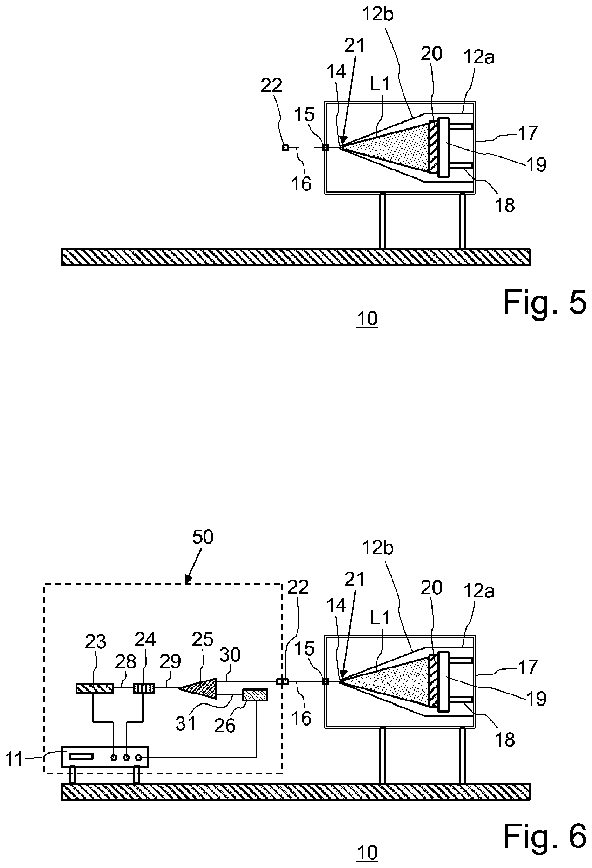

Tel qu'illustré sur la figure 5, l'invention vise un dispositif de mesure **10** permettant de caractériser les performances d'un détecteur optique **20.** Pour ce faire, le détecteur optique **20** est monté dans un cryostat **17** au moyen d'un support **19.** Le support **19** peut être constitué d'une plaque destinée à recevoir un circuit électronique sur lequel le détecteur **20** est monté. Ainsi, le support **19** peut recevoir des connecteurs d'alimentation électrique pour le circuit électronique de montage du détecteur **20.**

Ce support **19** est relié à une paroi interne du cryostat **17** au moyen de pieds **18.** Typiquement, quatre pieds **18** sont disposés aux quatre angles d'une plaque de support **19.** Pour acheminer les signaux d'alimentation électrique et de retour d'information du détecteur **20,** le cryostat **17** est classiquement traversé par un ensemble de connecteurs, non représentés sur la figure 5. Ainsi, lorsque le détecteur **20** est monté sur le support **19,** celui-ci peut être alimenté et commandé de manière analogue à son fonctionnement dans les conditions attendues lors de l'exploitation du détecteur **20.**

Par exemple, le détecteur **20** peut être destiné à des applications spatiales dans lesquelles le détecteur **20** fonctionne à une température très basse et à des niveaux de vide très poussés. Ainsi, le cryostat comprend des moyens de mise sous vide et des moyens de refroidissement, permettant de placer le détecteur **20** dans ses conditions de fonctionnement attendues.

Les dispositifs d'alimentation et de mesure des performances du détecteur sont classiquement disposés à l'extérieur du cryostat **17,** ainsi que les moyens de refroidissement et de mise sous vide du cryostat **17.**

Autour du détecteur **20,** le cryostat **17** comprend un écran destiné à limiter les rayonnements pouvant atteindre le support **19** dans la gamme de longueurs d'onde du détecteur **20.** Dans l'exemple de la figure 5, l'écran est réalisé en deux parties. Une partie parallélépipédique ou cylindrique **12a** est fixée sur une paroi interne du cryostat **17** ou au support **19.** Plus particulièrement, la partie parallélépipédique ou cylindrique **12a** de l'écran s'étend au-dessus de la hauteur du support **19** par rapport à la paroi interne du cryostat sur laquelle les pieds **18** sont fixés. Au-dessus de cette première partie parallélépipédique ou cylindrique **12a,** une seconde partie pyramidale ou conique **12b** est rapportée au-dessus du détecteur **20.** Au sommet de cette partie pyramidale ou conique **12b,** l'écran présente une ouverture recevant une première extrémité **14** d'une fibre optique **16.** Cette fibre optique **16** passe également par une ouverture **15** du cryostat, disposée en regard de l'ouverture de la portion pyramidale ou conique **12b** de l'écran.

Bien entendu, la forme de l'écran peut varier sans changer l'invention. Par exemple, l'écran peut comprendre une première portion cylindrique surmontée d'une portion tronconique ou tout autre forme permettant de ménager une ouverture de faible dimension en regard du détecteur **20**. En effet, l'invention confère deux rôles distincts à l'écran du cryostat **17** :

- un premier rôle de blocage des flux lumineux indésirés présents dans le cryostat **17** ; et
- un second rôle de positionnement de la première extrémité **14** de la fibre optique **16** en regard du détecteur **20**.

En effet, la première extrémité **14** de la fibre optique **16** doit être disposée de sorte que le flux lumineux sortant de cette première extrémité **14** recouvre principalement le plan focal du détecteur **20**. Pour ce faire, les dimensions du cryostat doivent être adaptées aux besoins de guidage de cette première extrémité **14** de la fibre optique **16**. Par exemple, le volume du cryostat **17** peut être compris entre 250 cm$^3$ et 1 000 cm$^3$. Il s'ensuit que le volume du cryostat **17** peut être trois fois plus grand que celui d'un cryostat de l'état de la technique, et ce volume dépend du type de fibre optique **16** utilisé et de son ouverture numérique au niveau de la première extrémité **14**. L'ouverture numérique caractérise le cône d'acceptance en entrée de la fibre et le cône de propagation en sortie de la fibre. Par exemple, l'ouverture numérique de la fibre optique **16** peut être sélectionnée entre 0,1 et 0,4 dans le régime monomodal.

De préférence, les matériaux de la paroi interne du cryostat **17,** de l'écran **12a** et **12b,** du support **19** et des pieds **18** sont sélectionnés pour limiter la désorption de molécules lors de la mise sous vide du détecteur **20**. De même, l'ouverture **15** du cryostat **17** est préférentiellement adaptée au diamètre de la fibre optique **16,** de sorte à limiter l'incorporation de flux lumineux parasites dans le cryostat **17**.

Plus particulièrement, la fibre optique **16** est une fibre optique principalement monomodale dans la gamme de longueurs d'onde du détecteur **20**. Ce caractère monomodal de la fibre optique **16** indique que la fibre optique présente préférentiellement une fréquence normalisée comprise entre 1.2 et 3.8 dans la gamme de longueurs d'onde d'intérêt. Par exemple, la fibre optique peut être réalisée avec un cœur en Zblan, en verre de chalcogénure ou en matériau polycristallin. En outre, la fibre optique **16** peut être recouverte d'une gaine spécialement sélectionnée pour limiter le risque de transmission de flux lumineux parasites au détecteur **20,** par exemple une gaine en acrylate. La gaine peut également être formée sur la base du même matériau que la fibre optique **16,** ce matériau est alors associé à des dopants permettant de définir la fenêtre de transmission et donc la bande spectrale sur laquelle la fibre optique **16** peut être utilisée.

En utilisant une fibre optique avec une fréquence normalisée comprise entre 1,2 et 3.8 dans la gamme de longueurs d'onde d'intérêt du détecteur **20,** la fibre optique **16** est particulièrement résistante à l'intégration de flux parasites externes depuis l'une de ses extrémités, puisque ces flux parasites présentent des longueurs d'onde bien distinctes des longueurs d'onde pouvant être couplées avec la fibre optique **16**. En outre, la gaine limite le risque d'intégration de flux parasites en dehors des extrémités de de la fibre optique **16**.

Pour transmettre un flux lumineux à l'intérieur de la fibre optique **16,** une seconde extrémité **22** de la fibre optique **16** est destinée à recevoir un flux lumineux d'une source fibrée **23, 33, 43**.

Cette source fibrée est préférentiellement intégrée dans un module de génération d'un flux lumineux utilisé en fonction de la mesure recherchée. Ainsi, le détecteur **20** peut être monté dans le cryostat **17** et la seconde extrémité **22** de la fibre optique peut recevoir différents modules de génération de flux lumineux en fonction des mesures recherchées.

Cette source fibrée destinée à transmettre le flux lumineux dans la seconde extrémité **22** de la fibre optique **16** est par exemple constituée d'une diode électroluminescente, d'une source super-continuum ou d'une source laser.

Lorsqu'il est recherché d'effectuer une mesure radiométrique, tel qu'illustré sur la figure 6, le module de génération du flux lumineux **50** comprend par exemple une source fibrée **23** connectée à une première fibre optique d'alimentation **28**. Cette fibre optique d'alimentation est connectée à un atténuateur optique **24** permettant de limiter le flux lumineux transmis sur la première fibre optique d'alimentation **28**. En sortie de l'atténuateur **24,** une seconde fibre optique d'alimentation **29** est mise en œuvre pour transmettre le flux lumineux en sortie de l'atténuateur optique **24** à un séparateur optique **25**. Ce séparateur optique **25** comporte deux sorties : une première sortie connectée à une troisième fibre optique d'alimentation **30,** elle-même connectée sur la seconde extrémité **22** de la fibre optique **16** ; et une quatrième fibre optique d'alimentation **31** connectée sur un détecteur de référence **26**.

Un contrôleur **11** asservit la puissance de la source fibrée **23** et le taux d'atténuation de l'atténuateur optique **24** en fonction de la quantité de photons recherchée et mesurée par le détecteur de référence **26**.

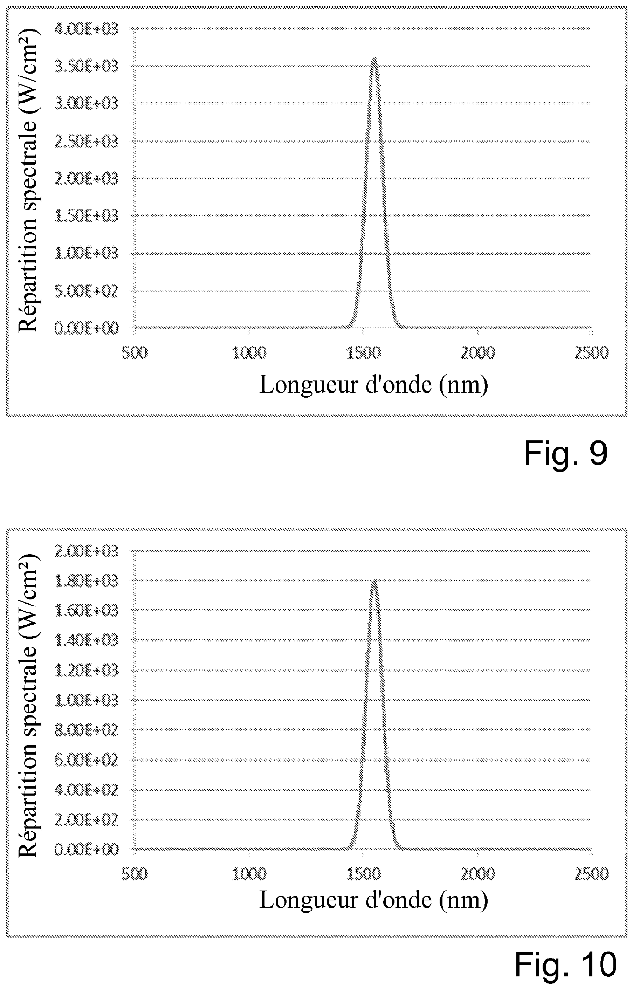

En sortie de la source fibrée **23,** la répartition spectrale du flux lumineux générée dans la fibre optique **23** est illustrée sur la figure 9. Sur les figures 9 à 14, la répartition spectrale du flux lumineux en sortie de fibre est représentée en W/cm$^2$ en fonction de la longueur d'onde en nanomètres. Cette répartition spectrale peut être mesurée par un dispositif de type spectroradiomètre. En outre, cette répartition spectrale du flux lumineux en sortie de fibre est également connue sous les termes « densité spectrale du flux énergétique ».

Dans l'exemple de la figure 9, l'utilisation de la source fibrée **23** et de la fibre optique **28** permet déjà d'obtenir un flux lumineux particulièrement centré dans la gamme de longueurs d'onde d'intérêt et présentant une puissance lumineuse très acceptable.

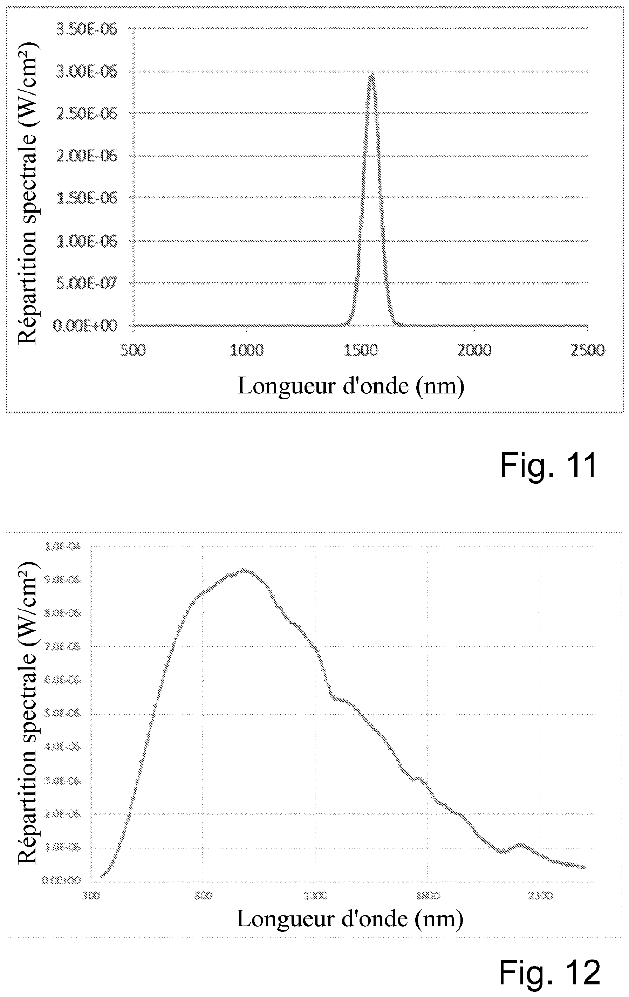

Après être passé dans l'atténuateur optique, le flux lumineux **L1** en sortie de la fibre optique **16** au niveau du cryostat **17** est illustré sur la figure 10. On constate que ce flux lumineux **L1** a conservé sa largeur spectrale mais a diminué en intensité lumineuse. Après propagation de ce flux lumineux **L1** à l'intérieur du cryostat, le flux lumineux mesuré au niveau du détecteur **20** est illustré sur la figure 11. Encore une fois, le flux lumineux mesuré au niveau du détecteur **20** a conservé une largeur spectrale très précise et a simplement perdu une partie de sa puissance lumineuse.

Ainsi, l'utilisation d'une source fibrée **23** et des fibres optiques **28, 29, 30, 16** adaptées au mode de transmission de la source fibrée **23,** permet de transmettre efficacement un flux lumineux avec des éléments présentant un très faible encombrement. Comparativement, la figure 12 illustre le flux lumineux **L12** en sortie de la sphère intégrante **102** de la figure 1a ; on constate que ce flux lumineux présente une largeur spectrale bien moins précise que le flux lumineux transmis par l'association de la source fibrée **23** et des fibres optiques **28, 29, 30, 16.**

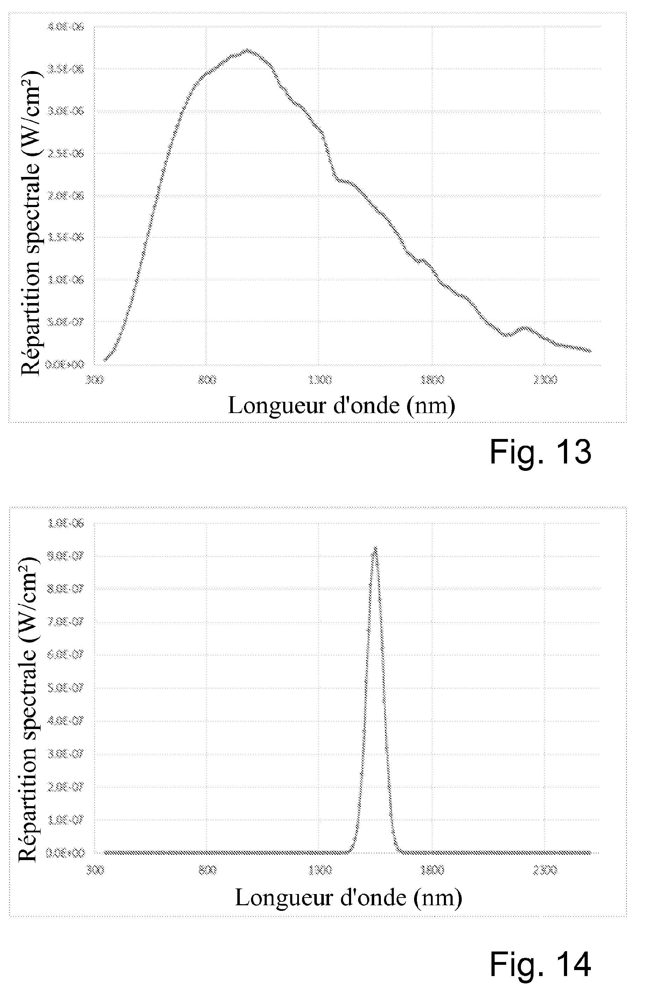

De même, dans l'exemple de la figure 1a, le flux lumineux **L13** en entrée du cryostat est illustré sur la figure 13 et présente toujours une largeur spectrale importante. C'est seulement après être passé dans le filtre de l'écran **112,** que la largeur spectrale du flux lumineux de l'état de la technique est réduite. Ainsi, tel qu'illustré sur la figure 14, le flux lumineux transmis au détecteur **20** dans le banc de mesure radiométrique de l'état de la technique présente également une largeur spectrale proche de celle de l'invention mais avec un niveau de puissance optique inférieur.

Il s'ensuit qu'avec des éléments moins coûteux, moins encombrants, et moins consommateurs en énergie, l'invention permet de générer un flux optique plus puissant et aussi précis que celui transmis dans le banc de mesure radiométrique de l'état de la technique, tel qu'illustré sur la figure 1a.

En outre, la possibilité de modifier le module de génération du flux lumineux sans avoir besoin de déplacer le cryostat **17** permet d'améliorer significativement la vitesse de mesure par rapport à l'utilisation de plusieurs bancs successifs de l'état de la technique.

Outre le module **50** illustré sur la figure 6 pour effectuer une mesure radiométrique, il est également possible de connecter un module **51** pour effectuer une mesure de rémanence.

Ce module **51** comprend une source fibrée **33,** par exemple une source identique à la source **23** du module **50,** ou une source présentant des propriétés distinctes. Cette source fibrée **33** est connectée à une première fibre optique d'alimentation, elle-même connectée à un obturateur optique **35.** L'obturateur optique **35** est connecté à une seconde fibre optique d'alimentation **29,** elle-même connectée sur un séparateur optique **25.** Ce séparateur optique **25** comporte deux sorties :

- une première sortie connectée sur une troisième fibre optique d'alimentation **30,** elle-même connectée sur la seconde extrémité **22** de la fibre optique **16 ;** et
- une seconde sortie connectée sur une quatrième fibre optique d'alimentation **31** connectée à un détecteur de référence **34.**

Le contrôleur **11** permet de contrôler le flux lumineux émis par la source fibrée et l'obturateur optique **35** pour mesurer les effets de rémanence et de prérémanence en comparant les images acquises par le détecteur **20** et par le détecteur de référence **34.**

Pour obtenir la mesure du courant d'obscurité, il n'est pas nécessaire d'utiliser un module de génération du flux lumineux dédié, et il suffit d'éteindre la source fibrée **23** ou **33** du module de génération de lumineux **50** ou **51.**

En effet, sans flux lumineux généré par la source fibrée **23** ou **33,** les longueurs d'ondes des flux lumineux des lumières ambiantes ne peuvent pas être couplées avec la fibre optique si bien qu'il est possible de mesurer efficacement le courant d'obscurité.

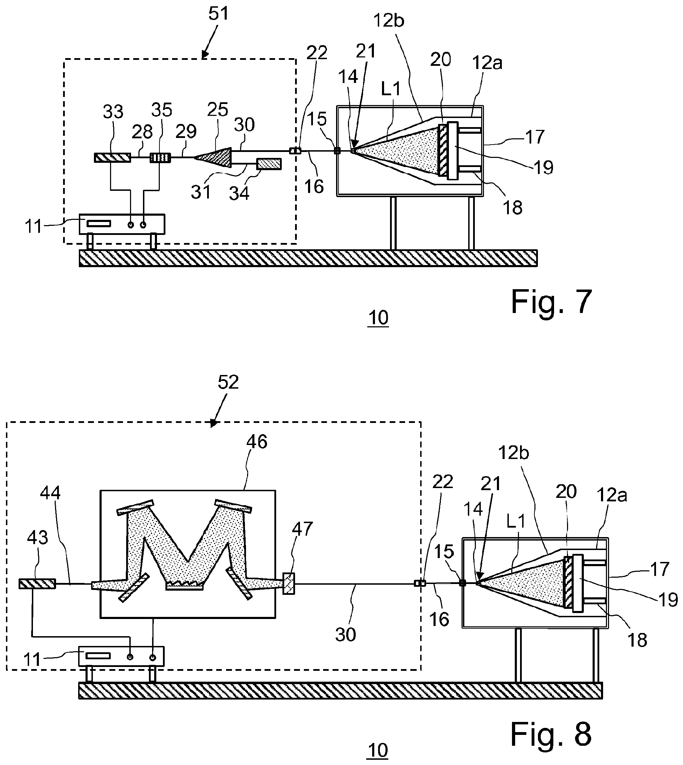

En ce qui concerne la réponse spectrale, un module de génération de flux lumineux **52** peut être connecté à la seconde extrémité **22** de la fibre optique **16,** tel qu'illustré sur la figure 8. Par exemple, ce module **52** comprend une source fibrée **43** connectée à une première fibre optique d'alimentation **44.** Cette première fibre optique d'alimentation **44** est également connectée sur un réseau de diffraction **46.** La sortie du réseau de diffraction **46** est projetée sur un filtre **47** permettant de limiter les ordres de diffraction du flux lumineux en sortie du réseau de diffraction **46.** Ce flux lumineux filtré est intégré dans une seconde fibre optique d'alimentation **30.** Cette seconde fibre optique d'alimentation **30** est connectée sur la seconde extrémité **22** de la fibre optique **16.**

Ainsi, un contrôleur **11** peut contrôler les paramètres du réseau de diffraction **46** pour effectuer une mesure de la réponse spectrale.

Pour effectuer la mesure de la réponse spectrale, il convient de faire varier la longueur d'onde du flux lumineux en sortie de la fibre **16** et de mesurer le rapport entre la réponse du détecteur **20** et la réponse d'un détecteur de référence dont la réponse spectrale est connue.

Pour ce faire, le détecteur de référence peut être positionné dans le cryostat à côté du détecteur **20** afin d'obtenir directement le rapport entre la réponse du détecteur **20** et la réponse du détecteur de référence.

En variante, le détecteur de référence peut être positionné dans un second cryostat présentant des propriétés analogues au cryostat **17** du détecteur **20,** ce second cryostat intégrant également une fibre optique **16** apte à recevoir le flux lumineux. Après ou avant d'effectuer les mesures sur le détecteur **20,** la fibre optique **30** peut ainsi être connectée sur la fibre optique du second cryostat pour effectuer les mêmes mesures sur le détecteur de référence. Le rapport entre la réponse du détecteur **20** et la réponse du détecteur de référence est ainsi calculé à l'issue de deux phases de mesures, sur le détecteur **20** et sur le détecteur de référence.

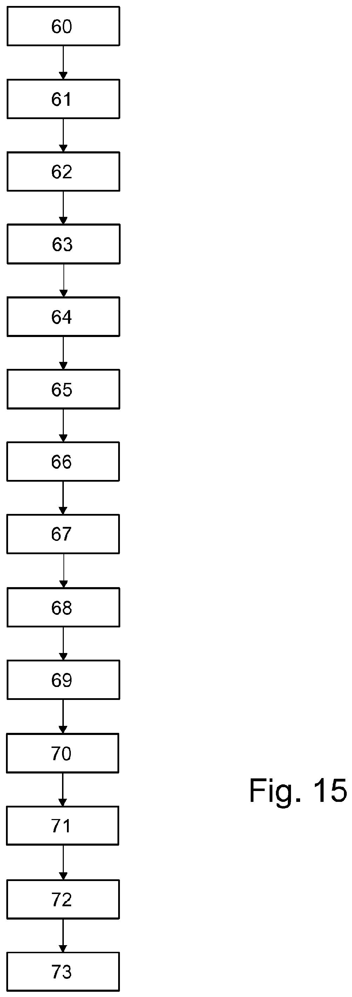

Tel qu'illustré sur la figure 15, le procédé de mesure des performances d'un détecteur optique **20** peut comprendre une première étape **60** de montage du détecteur **20** sur le support **19** du cryostat. Une seconde étape **61** consiste à mettre sous vide le cryostat pour atteindre le niveau de vide de fonctionnement recherché du détecteur **20.** Les moyens de refroidissement du cryostat **17** sont ensuite mis en œuvre dans une étape **62** et, dans le même temps, un premier module de génération de flux lumineux peut être connecté sur la seconde extrémité **22** de la fibre optique **16,** dans une étape **63.** Lorsqu'un module **50** à **52** de génération de flux lumineux est connecté sur la seconde extrémité **22** de la fibre optique **16,** des mesures de performance du détecteur **20** peuvent être réalisées, dans une étape **64.**

Ensuite, lorsque toutes les mesures de performance du détecteur **20** sont réalisées au moyen du module **50** à **52** connecté, le module **50** à **52** peut être déconnecté, dans une étape **65.** Lors de cette déconnexion du module **50** à **52,** il n'est pas nécessaire de modifier la température ou le niveau de vide du cryostat **17,** si bien qu'un second module **50** à **52** peut ensuite être connecté sur la fibre optique **16,** dans une étape **66.** Des mesures de performance du détecteur **20** peuvent ensuite être réalisées, dans une étape **67,** sur la base du nouveau module **50** à **52** connectée sur la fibre optique **16.**

Plusieurs modules **50** à **52** peuvent ainsi être connectés successivement sur la fibre optique **16** sans avoir besoin de modifier la température ou le niveau de vide du cryostat **17.**

Par exemple, on peut avoir la succession d'étapes suivantes :

- étape **63** : connexion du module de génération **50** permettant d'effectuer une mesure radiométrique ;
- étape **64** : mesure radiométrique des performances du détecteur **20** ;
- étape **65 :** déconnexion du module **50 ;**
- étape **66 :** connexion du module **51** pour mesurer la rémanence ;
- étape **67 :** mesure de la rémanence du détecteur ;
- étape **68** : mesure de courant d'obscurité du détecteur en éteignant la source fibrée **33** du module **51.**

Lorsque les mesures de rémanence et de courant d'obscurité sont réalisées par le module **51,** on a alors la succession d'étapes suivante :

- étape **69 :** déconnexion du module **51** ;
- étape **70 :** connexion du module **52** permettant de mesurer la réponse spectrale ;
- étape **71** : mesure de la réponse spectrale du détecteur **20.**

Quel que soit le nombre de modules **50** à **52** connectés sur la fibre optique **16** pour caractériser le détecteur **20,** le procédé se termine par une étape **72** de réchauffage du cryostat **17** et une étape **73** de remise sous pression ambiante du cryostat **17** et de démontage du détecteur **20.**

L'invention permet ainsi d'obtenir un dispositif de mesure **10** des performances d'un détecteur optique **20** présentant un encombrement plus faible et un coût restreint par rapport à l'utilisation de multiples bancs de mesure. En effet, l'invention permet d'interchanger les modules de génération de flux lumineux pour les coupler à une fibre optique partiellement intégrée dans le cryostat **17.** Cette possibilité de couplage de différents modules **50** à **52** sur la fibre optique **16** permet d'améliorer la vitesse et la durée nécessaire pour réaliser l'ensemble des mesures.

Par exemple, lorsqu'il est recherché de caractériser un détecteur **20** en effectuant une mesure radiométrique, une mesure de rémanence, une mesure du courant d'obscurité et une mesure de la réponse spectrale, l'invention permet d'obtenir une division d'un facteur compris entre 5 et 10 du temps de mesure.

En outre, il a été constaté que la précision des mesures obtenues est également plus performante que celle obtenue dans l'état de la technique. En effet, le taux de répétabilité des mesures a été estimé à 0,1 % avec les dispositifs de l'état de la technique et l'invention a permis d'obtenir un taux de répétabilité de 0,01 %. Ce taux de répétabilité est calculé en répétant un grand nombre de fois une mesures similaires et en calculant la divergence entre ces mesures.

**Revendications**

**1.** Dispositif de mesure (10) des performances d'un détecteur optique (20) comprenant :

- un cryostat (17) comprenant des moyens de mise sous vide et des moyens de refroidissement aptes à placer le détecteur (20) dans ses conditions de fonctionnement attendues ;
- un support (19) apte à recevoir le détecteur (20), fixé à l'intérieur du cryostat (17) ;
- des moyens de mesure des performances du détecteur (20) ; et
- un écran (12a-12b) disposé autour du support (19) apte à limiter les rayonnements susceptibles d'atteindre le support dans une gamme de longueurs d'ondes du détecteur (20) ;
*caractérisé en ce que* le dispositif de mesure (10) comprend également :

- une fibre optique (16) monomodale dans la gamme de longueurs d'onde du détecteur (20) ; la fibre optique (16) étant insérée dans une ouverture (15) du cryostat (17) et comprenant :

• une première extrémité (14) fixée au niveau d'une ouverture de l'écran (12a-12b), de sorte à projeter un flux lumineux sur tout ou partie du détecteur (20) ; et

• une seconde extrémité (22), extérieure au cryostat (17), destinée à recevoir un flux lumineux ; et

- au moins deux modules (50-52) de génération d'un flux lumineux intégrant une source fibrée (23, 33, 43) apte à générer le flux lumineux dans la seconde extrémité (22) de la fibre optique (16) ;

les moyens de mesure des performances du détecteur (20) étant aptes à mesurer lesdites performances en fonction du flux lumineux reçu sur la seconde extrémité (22) ; plusieurs mesures distinctes pouvant être réalisées en interchangeant le module (50-52) connecté sur la seconde extrémité (22).

2. Dispositif de mesure des performances d'un détecteur optique (20) selon la revendication 1, *dans lequel* la source fibrée (23, 33, 43) est constituée d'une diode électroluminescente, d'une source super-continuum ou d'un laser.

3. Dispositif de mesure des performances d'un détecteur optique (20) selon la revendication 1 ou 2, *dans lequel* la fibre optique (16) est réalisée avec un cœur en verre fluoré, en verre de chalcogénure ou en matériau polycristallin.

4. Dispositif de mesure des performances d'un détecteur optique (20) selon l'une des revendications 1 à 3, *dans lequel* l'un des modules de génération du flux lumineux (50), destiné à être connecté sur la seconde extrémité (22) de la fibre optique (16) pour effectuer une mesure radiométrique, comprend :

- une source fibrée (23) destinée à générer un flux lumineux à l'intérieur d'une première fibre optique d'alimentation (28) ;
- un atténuateur optique (24), apte à limiter le flux lumineux, ledit atténuateur (24) étant connecté entre la première fibre optique d'alimentation (28) et une seconde fibre optique d'alimentation (29) ;
- un séparateur optique (25), connecté sur la seconde fibre optique d'alimentation (29), apte à séparer le flux lumineux de la seconde fibre optique d'alimentation (29) sur une troisième (30) et une quatrième (31) fibre optique d'alimentation ; la troisième fibre optique d'alimentation (30) étant connectée sur la seconde extrémité (22) de la fibre optique (16) insérée dans le cryostat (17) ; et
- un détecteur de référence (26), connecté sur la quatrième fibre optique d'alimentation (31), et apte à mesurer le flux lumineux en sortie du séparateur optique (25) de sorte à commander la puissance de la source fibrée (23) et de l'atténuation optique (24) pour obtenir une puissance lumineuse de mesure attendue.

5. Dispositif de mesure des performances d'un détecteur optique (20) selon l'une des revendications 1 à 4, *dans lequel* l'un des modules de génération du flux lumineux (51), destiné à être connecté sur la seconde extrémité (22) de la fibre optique (16) pour effectuer une mesure de rémanence, comprend :

- une source fibrée (33) destinée à générer un flux lumineux à l'intérieur d'une première fibre optique d'alimentation (28) ;
- un obturateur optique (35), apte à bloquer le flux lumineux, connecté entre la première fibre optique d'alimentation (28) et une seconde fibre optique d'alimentation (29) ;
- un séparateur optique (25), connecté sur la seconde fibre optique d'alimentation (29), apte à séparer le flux lumineux de la seconde fibre optique d'alimentation (29) sur une troisième (30) et une quatrième (31) fibre optique d'alimentation ; la troisième fibre optique d'alimentation (30) étant connectée sur la seconde extrémité (22) de la fibre optique (16) insérée dans le cryostat (17) ; et
- un détecteur de référence (34), connecté sur la quatrième fibre optique d'alimentation (31), apte à contrôler le flux lumineux en sortie du séparateur optique (25).

6. Dispositif de mesure des performances d'un détecteur optique (20) selon la revendication 5, *dans lequel* le module de génération du flux lumineux (51), destiné à être connecté sur la seconde extrémité (22) de la fibre optique (16) pour effectuer une mesure de rémanence, est également mis en œuvre afin de réaliser une mesure du courant d'obscurité en coupant l'alimentation électrique de la source fibrée (33).

7. Dispositif de mesure des performances d'un détecteur optique (20) selon l'une des revendications 1 à 5, *dans lequel* la fibre optique (16) présente une fréquence normalisée (V) comprise entre 1.2 et 3.8 dans la gamme de longueurs d'onde d'intérêt.

**8.** Dispositif de mesure des performances d'un détecteur optique (20) selon l'une des revendications 1 à 7, *dans lequel* l'un des modules de génération du flux lumineux (52), destiné à être connecté sur la seconde extrémité (22) de la fibre optique (16) pour effectuer une mesure de la réponse spectrale, comprend :

- une source fibrée (43) destinée à générer un flux lumineux à l'intérieur d'une première fibre optique d'alimentation (44) ;
- un réseau de diffraction (46) connecté sur la première fibre optique d'alimentation (44) ;
- un filtre (47) connecté en sortie du réseau de diffraction (46) ; et
- une seconde fibre optique d'alimentation (48) connectée en sortie du second filtre (47).

**9.** Procédé de mesure des performances d'un détecteur optique (20) au moyen d'un dispositif de mesure (10) selon l'une des revendications 1 à 8, ledit procédé comprenant les étapes suivantes :

- montage (60) du détecteur (20) sur le support (19) du cryostat (17) ;
- mise sous vide (61) du cryostat (17) de sorte à atteindre un niveau de vide de fonctionnement recherché du détecteur (20) ;
- refroidissement (62) du cryostat (17) de sorte à atteindre une température de fonctionnement recherchée du détecteur (20) ;
- connexion (63) d'un premier module (50-52) de génération de flux lumineux sur la seconde extrémité (22) de la fibre optique (16) ;
- mesure (64) des performances du détecteur (20) ;
- déconnexion (65) du premier module (50-52) de génération de flux lumineux de la seconde extrémité (22) de la fibre optique (16) ;
- connexion (66) d'un second module (50-52) de génération de flux lumineux sur la seconde extrémité (22) de la fibre optique (16) ;
- mesure (67) des performances du détecteur (20) ;
- réchauffage (72) du cryostat (17) de sorte à atteindre la température ambiante ; et
- remise sous pression ambiante du cryostat (17) et démontage (73) du détecteur (20).

**10.** Procédé de mesure des performances d'un détecteur optique selon la revendication 9, ledit procédé comprenant les étapes suivantes :

- connexion (63) d'un premier module de génération de flux lumineux (50) pour effectuer une mesure radiométrique sur la seconde extrémité (22) de la fibre optique (16) ;
- mesure radiométrique (64) du détecteur (20) ;

- déconnexion (65) du premier module de génération de flux lumineux (50) de la seconde extrémité (22) de la fibre optique (16) ;
- connexion (66) d'un second module de génération de flux lumineux (51) pour effectuer une mesure de rémanence sur la seconde extrémité (22) de la fibre optique (16) ;
- mesure de la rémanence (67) du détecteur (20) ;
- mesure (68) du courant d'obscurité du détecteur (20) ;
- déconnexion (69) du second module de génération de flux lumineux (51) de la seconde extrémité (22) de la fibre optique (16) ;
- connexion (70) d'un troisième module de génération de flux lumineux (52) pour effectuer une mesure de la réponse spectrale sur la seconde extrémité (22) de la fibre optique (16) ; et
- mesure (71) de la réponse spectrale du détecteur (20).

**Patentansprüche**

**1.** Vorrichtung (10) zum Messen der Leistung eines optischen Detektors (20), die Folgendes umfasst:

- einen Kryostat (17) mit Evakuierungs- und Kühlmitteln, die geeignet sind, die Betriebsbedingungen für einen Detektor (20) herszustellen, die erwartetet werden;
- eine Halterung (19), die zur Aufnahme des Detektors (20) geeignet ist und im Inneren des Kryostats (17) befestigt ist;
- Mittel zur Messung der Leistung des Detektors (20); und
- eine Abschirmung (12a-12b). die um die Halterung (19) angeordnet und geeignet ist, die Strahlung zu begrenzen, welche die Halterung in einem Wellenlängenbereich des Detektors (20) erreichen kann;

*dadurch gekennzeichnet, dass* die Messvorrichtung (10) auch Folgendes umfasst:

- eine Glasfaser (16), die im Wellenlängenbereich des Detektors (20) monomodal ist; wobei die Glasfaser (16) in eine Öffnung (15) des Kryostats (17) eingeführt ist und Folgendes umfasst:

• ein erstes Ende (14), das an einer Öffnung der Abschirmung (12a-12b) befestigt ist, um einen Lichtstrom auf den gesamten oder einen Teil des Detektors (20) zu projizieren; und
• ein zweites Ende (22), außerhalb des Kryostats (17), um einen Lichtstrom aufzunehmen; und

- mindestens zwei Module (50-52) zur Erzeugung eines Lichtstroms, in die eine Faserquelle (23, 33, 43) integriert ist, die geeignet ist, den Lichtstrom im zweiten Ende (22) der Glasfaser (16) zu erzeugen;

wobei die Mittel zur Messung der Leistung des Detektors (20) geeignet sind, die genannte Leistung in Abhängigkeit von dem am zweiten Ende (22) aufgenommenen Lichtstrom zu messen und mehrere unterschiedliche Messungen durch Auswechseln des Moduls (50-52) durchgeführt werden können, das am zweiten Ende (22) angeschlossen ist.

2. Vorrichtung zum Messen der Leistung eines optischen Detektors (20) nach Anspruch 1, *bei welcher* die Faserquelle (23, 33, 43) aus einer Leuchtdiode, einer Superkontinuumsquelle oder einem Laser besteht.

3. Vorrichtung zur Messung der Leistung eines optischen Detektors (20) nach Anspruch 1 oder 2, *bei welcher* die Glasfaser (16) mit einem Kern aus Fluoridglas, Chalkogenidglas oder einem polykristallinen Material hergestellt ist.

4. Vorrichtung zur Messung der Leistung eines optischen Detektors (20) nach einem der Ansprüche 1 bis 3, *bei welcher* eines der Lichtstromerzeugungsmodule (50), das dazu bestimmt ist, mit dem zweiten Ende (22) der Glasfaser (16) verbunden zu werden, um eine radiometrische Messung durchzuführen, Folgendes umfasst:

   - eine Faserquelle (23) zum Erzeugen eines Lichtstroms im Inneren einer ersten zuführenden Glasfaser (28);
   - ein optisches Dämpfungsglied (24), das geeignet ist, den Lichtstrom zu begrenzen, wobei das Dämpfungsglied (24) zwischen der ersten zuführenden Glasfaser (28) und einer zweiten zuführenden Glasfaser (29) angeschlossen ist;
   - einen Strahlteiler (25), der mit der zweiten zuführenden Glasfaser (29) verbunden ist und den Lichtstrom von der zweiten zuführenden Glasfaser (29) auf eine dritte (30) und eine vierte (31) zuführende Glasfaser aufteilen kann; wobei die dritte zuführende Glasfaser (30) mit dem zweiten Ende (22) der Glasfaser (16) verbunden ist, die in den Kryostat (17) eingeführt ist; und
   - einen Referenzdetektor (26), der mit der vierten zuführenden Glasfaser (31) verbunden ist und geeignet ist, den Lichtstrom am Ausgang des Strahlteilers (25) zu messen, um die Leistung der Faserquelle (23) und der optischen Dämpfung (24) so zu steuern, dass eine erwartete Messlichtleistung erzielt wird.

5. Vorrichtung zur Messung der Leistung eines optischen Detektors (20) nach einem der Ansprüche 1 bis 4, *bei welcher* eines der Module zur Lichtstromerzeugung (51), das dazu bestimmt ist, mit dem zweiten Ende (22) der Glasfaser (16) verbunden zu werden, um eine Remanenzmessung durchzuführen, Folgendes umfasst:

   - eine Faserquelle (33) zum Erzeugen eines Lichtstroms in einer ersten zuführenden Glasfaser (28);
   - einen optischen Verschluss (35), der zum Blockieren des Lichtstroms geeignet ist und zwischen der ersten zuführenden Glasfaser (28) und einer zweiten zuführenden Glasfaser (29) angeschlossen ist;
   - einen Strahlteiler (25), der mit der zweiten zuführenden Glasfaser (29) verbunden ist und den Lichtstrom von der zweiten zuführenden Glasfaser (29) auf eine dritte (30) und eine vierte (31) zuführende Glasfaser aufteilen kann; wobei die dritte zuführende Glasfaser (30) mit dem zweiten Ende (22) der Glasfaser (16) verbunden ist, das in den Kryostat (17) eingeführt ist; und
   - einen Referenzdetektor (34), der mit der vierten zuführenden Glasfaser (31) verbunden ist und den Lichtstrom am Ausgang des Strahlteilers (25) kontrollieren kann.

6. Vorrichtung zur Messung der Leistung eines optischen Detektors (20) nach Anspruch 5, *bei welcher* das Modul zur Lichtstromerzeugung (51), das dazu bestimmt ist, mit dem zweiten Ende (22) der Glasfaser (16) verbunden zu werden, um eine Remanenzmessung durchzuführen, auch eingesetzt wird, um eine Dunkelstrommessung durchzuführen, indem die Stromversorgung der Faserquelle (33) getrennt wird.

7. Vorrichtung zur Messung der Leistung eines optischen Detektors (20) nach einem der Ansprüche 1 bis 5, *bei welcher* die Glasfaser (16) eine normierte Frequenz (V) zwischen 1,2 und 3,8 in dem Wellenlängenbereich von Interesse aufweist.

8. Vorrichtung zur Messung der Leistung eines optischen Detektors (20) nach einem der Ansprüche 1 bis 7, *bei welcher* eines der Module zur Lichtstromerzeugung (52), das dazu bestimmt ist, mit dem zweiten Ende (22) der Glasfaser (16) verbunden zu werden, um eine Messung der Spektralempfindlichkeit durchzuführen, Folgendes umfasst:

   - eine Faserquelle (43) zum Erzeugen eines Lichtstroms im Inneren einer ersten zuführenden Glasfaser (44);
   - ein Beugungsgitter (46), das mit der ersten zuführenden Glasfaser (44) verbunden ist;

- einen Filter (47), der mit dem Ausgang des Beugungsgitters (46) verbunden ist; und

- eine zweite zuführende Glasfaser (48), die am Ausgang des zweiten Filters (47) angeschlossen ist.

9. Verfahren zum Messen der Leistung eines optischen Detektors (20) mithilfe einer Messvorrichtung (10) nach einem der Ansprüche 1 bis 8, wobei das Verfahren folgende Schritte umfasst:

- Montage (60) des Detektors (20) an der Halterung (19) des Kryostats (17);
- Evakuieren (61) des Kryostats (17), um ein Betriebsvakuumniveau zu erreichen, das vom Detektor (20) angestrebt wird;
- Abkühlen (62) des Kryostats (17), um eine Betriebstemperatur zu erreichen, die vom Detektor (20) angestrebt wird;
- Anschließen (63) eines ersten Moduls zur Lichtstromerzeugung (50-52) an das zweite Ende (22) der Glasfaser (16);
- Messen (64) der Leistung des Detektors (20);
- Trennung (65) des ersten Moduls zur Lichtstromerzeugung (50-52) vom zweiten Ende (22) der Glasfaser (16);
- Anschließen (66) eines zweiten Lichtstromerzeugungsmoduls (50-52) an das zweite Ende (22) der Glasfaser (16);
- Messen (67) der Leistung des Detektors (20);
- Aufwärmen (72) des Kryostats (17) auf Umgebungstemperatur; und
- Wiederherstellen des Umgebungsdrucks des Kryostats (17) und Demontage (73) des Detektors (20).

10. Verfahren zum Messen der Leistung eines optischen Detektors nach Anspruch 9, wobei das Verfahren folgende Schritte umfasst:

- Anschluss (63) eines ersten Moduls zur Lichtstromerzeugung (50), um eine radiometrische Messung am zweiten Ende (22) der Glasfaser (16) durchzuführen;
- radiometrische Messung (64) des Detektors (20);
- Trennung (65) des ersten Moduls zur Lichtstromerzeugung (50) vom zweiten Ende (22) der Glasfaser (16);
- Anschluss (66) eines zweiten Moduls zur Lichtstromerzeugung (51), um eine Remanenzmessung am zweiten Ende (22) der Glasfaser (16) durchzuführen;
- Remanenzmessung (67) des Detektors (20);
- Dunkelstrommessung (68) des Detektors (20);
- Trennen (69) des zweiten Moduls zur Lichtstromerzeugung (51) von dem zweiten Ende (22) der Glasfaser (16);
- Anschluss (70) eines dritten Moduls zur Lichtstromerzeugung (52), um eine Messung der spektralen Empfindlichkeit am zweiten Ende (22) der Glasfaser (16) durchzuführen; und
- Messen (71) der Spektralempfindlichkeit des Detektors (20).

**Claims**

1. A device (10) for measuring the performance of an optical detector (20) comprising:

- a cryostat (17) comprising means for placing it under vacuum and cooling it capable of placing the detector (20) in its anticipated operating conditions;
- a holder (19) capable of receiving the detector (20), secured to the inside of the cryostat (17);
- means for measuring the performance of the detector (20); and
- a screen (12a-12b) arranged around the holder (19) capable of limiting the radiation likely to reach the holder in a wavelength range of the detector (20);
*characterized in that* the measurement device (10) also comprises:

- a single-mode optical fiber (16) in the wavelength range of the detector (20); the optical fiber (16) being inserted in an opening (15) of the cryostat (17) and comprising:

• a first end (14) secured to an opening of the screen (12a-12b), to project a luminous flux onto all or part of the detector (20); and
• a second end (22), external to the cryostat (17), intended to receive a luminous flux; and

- at least two modules (50-52) for generating a luminous flux that incorporate a fibered source (23, 33, 43) capable of generating the luminous flux in the second end (22) of the optical fiber (16);

the means for measuring the performance of the detector (20) being capable of measuring said performance according to the luminous flux received on the second end (22); where a plurality of distinct measurements may be performed by interchanging the module (50-52) connected on the second end (22).

2. The device for measuring the performance of an optical detector (20) according to claim 1, *wherein*

the fibered source (23, 33, 43) is formed of a light-emitting diode, of a supercontinuum source, or of a laser.

3. The device for measuring the performance of an optical detector (20) according to claim 1 or 2, **wherein** the optical fiber (16) is formed with a core made of fluorinated glass, of chalcogenide glass, or of polycrystalline material.

4. The device for measuring the performance of an optical detector (20) according to any of claims 1 to 3, **wherein** one of the luminous flux generation modules (50), intended to be connected on the second end (22) of the optical fiber (16) to perform a radiometric measurement, comprises:

- a fibered source (23) intended to generate a luminous flux inside of a first feeder optical fiber (28);
- an optical attenuator (24), capable of limiting the luminous flux, said attenuator (24) being connected between the first feeder optical fiber (28) and a second feeder optical fiber (29);
- an optical splitter (25), connected to the second feeder optical fiber (29), capable of splitting the luminous flux of the second feeder optical fiber (29) onto a third (30) and a fourth (31) feeder optical fiber; the third feeder optical fiber (30) being connected on the second end (22) of the optical fiber (16) inserted in the cryostat (17); and
- a reference detector (26), connected on the fourth feeder optical fiber (31), and capable of measuring the luminous flux at the output of the optical splitter (25) in order to control the power of the fibered source (23) and the optical attenuation (24) to obtain an anticipated measurement luminous power.

5. The device for measuring the performance of an optical detector (20) according to any of claims 1 to 4, **wherein** one of the luminous flux generation modules (51), intended to be connected on the second end (22) of the optical fiber (16) to perform a remanence measurement, comprises:

- a fibered source (33) intended to generate a luminous flux inside of a first feeder optical fiber (28);
- an optical shutter (35), capable of blocking the luminous flux, connected between the first feeder optical fiber (28) and a second feeder optical fiber (29);
- an optical splitter (25), connected to the second feeder optical fiber (29), capable of splitting the luminous flux of the second feeder optical fiber (29) onto a third (30) and a fourth (31) feeder optical fiber; the third feeder optical fiber (30) being connected on the second end (22) of the optical fiber (16) inserted in the cryostat (17); and
- a reference detector (34), connected to the fourth feeder optical fiber (31), capable of controlling the luminous flux at the output of the optical splitter (25).

6. The device for measuring the performance of an optical detector (20) according to claim 5, **wherein** the luminous flux generation module (51), intended to be connected on the second end (22) of the optical fiber (16) to perform a remanence measurement, is also implemented to perform a dark current measurement by cutting off the electric power supply of the fibered source (33).

7. The device for measuring the performance of an optical detector (20) according to any of claims 1 to 5, **wherein** the optical fiber (16) has a normalized frequency (V) in the range from 1.2 to 3.8 in the wavelength range of interest.

8. The device for measuring the performance of an optical detector (20) according to any of claims 1 to 7, **wherein** one of the luminous flux generation modules (52), intended to be connected on the second end (22) of the optical fiber (16) to perform a spectral response measurement, comprises:

- a fibered source (43) intended to generate a luminous flux inside of a first feeder optical fiber (44);
- a diffraction grating (46) connected to the first feeder optical fiber (44);
- a filter (47) connected at the output of the diffraction grating (46); and
- a second feeder optical fiber (48) connected at the output of the second filter (47).

9. A method of measuring the performance of an optical detector (20) by means of a measurement device (10) according to any of claims 1 to 8, said method comprising the following steps:

- assembly (60) of the detector (20) to the holder (19) of the cryostat (17);
- placing under vacuum (61) of the cryostat (17) to reach a desired operating vacuum level of the detector (20);
- cooling (62) of the cryostat (17) to reach a desired operating temperature of the detector (20);
- connection (63) of a first luminous flux generation module (50-52) on the second end (22) of the optical fiber (16);
- measurement (64) of the performance of the detector (20);

- disconnection (65) of the first luminous flux generation module (50-52) from the second end (22) of the optical fiber (16);
- connection (66) of a second luminous flux generation module (50-52) on the second end (22) of the optical fiber (16);
- measurement (67) of the performance of the detector (20);
- heating (72) of the cryostat (17) to reach the room temperature; and
- placing back under ambient pressure of the cryostat (17) and disassembly (73) of the detector (20).

10. The method of measuring the performance of an optical detector according to claim 9, said method comprising the following steps:

- connection (63) of a first luminous flux generation module (50) to perform a radiometric measurement on the second end (22) of the optical fiber (16);
- radiometric measurement (64) of the detector (20);
- disconnection (65) of the first luminous flux generation module (50) from the second end (22) of the optical fiber (16);
- connection (66) of a second luminous flux generation module (51) to perform a remanence measurement on the second end (22) of the optical fiber (16);
- measurement of the remanence (67) of the detector (20);
- measurement (68) of the dark current of the detector (20);
- disconnection (69) of the second luminous flux generation module (51) from the second end (22) of the optical fiber (16);
- connection (70) of a third luminous flux generation module (52) to perform a spectral response measurement on the second end (22) of the optical fiber (16); and
- measurement (71) of the spectral response of the detector (20).

**Fig. 1a**
Etat de la technique

**Fig. 1b**
Etat de la technique

111
20 112

L21

210

107

108

201 202

200

## Fig. 2a
Etat de la technique

220

221

222

223

224

225

## Fig. 2b
Etat de la technique

20    108    112

107    111

313    311

Fig. 3a
300    Etat de la technique

320

321

322

323

324

325

Fig. 3b
Etat de la technique

Fig. 4a
Etat de la technique

400

Fig. 4b
Etat de la technique

Fig. 5

10

Fig. 6

10

Fig. 7

10

Fig. 8

10

Fig. 9

Fig. 10

Fig. 11

Fig. 12

Fig. 13

Fig. 14

Fig. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CHORIER PHILIPPE et al.** Sofradir latest developments for infrared space detectors. *INFRARED TECHNOLOGY AND APPLICATIONS XXXVII*, 13 May 2011, vol. 8012 (1), 1-12